# EUROPÄISCHE PATENTANMELDUNG

(11) **EP 1 669 273 A2**
(43) Veröffentlichungstag der Anmeldung: **14.06.2006**
(21) Anmeldenummer: 05109777.2
(22) Anmeldetag: 20.10.2005
(51) Int. Cl.: B62D 1/28, G06T 7/00

(54) **Einrichtung zur Übertragung von Bilddaten**

(30) Priorität: 01.12.2004 DE 102004057922
(71) Anmelder: ROBERT BOSCH GMBH, 70442 Stuttgart (DE)
(72) Erfinder: Maass, Alexander, 71229, Leonberg (DE); Leicht, Holger, 71296, Heimsheim (DE)

(57) **Zusammenfassung**

Bei einer Einrichtung zur Übertragung von Bilddaten von einer in einem Fahrzeug angeordneten Videokamera zu einer im Fahrzeug von der Videokamera entfernt angeordneten Bildauswertungseinrichtung ist in räumlicher Nähe zur Videokamera eine Einrichtung zur Datenreduktion vorgesehen, welche von der Videokamera erzeugte Bilddaten an die Bildauswertungseinrichtung angepasst reduziert und die reduzierten Bilddaten zur Bildauswertungseinrichtung sendet.

## Beschreibung

### Stand der Technik

Die Erfindung betrifft eine Einrichtung zur Übertragung von Bilddaten von einer in einem Fahrzeug angeordneten Videokamera zu einer im Fahrzeug von der Videokamera entfernt angeordneten Bildauswertungseinrichtung.

Einrichtungen nach der Gattung des Hauptanspruchs sind in verschiedenen Ausführungen bekannt, beispielsweise zur Erkennung der Fahrspur, um den Fahrer bei einem Abweichen der Fahrspur zu warnen, oder als Auffahrwarnsystem, wobei die Bildauswertungseinrichtung vorausfahrende Fahrzeuge als solche erkennt.

Bei den bekannten Vorschlägen ist jedoch die Übertragung der Bilddaten von der Videokamera, die im Fahrzeug an einem Ort angeordnet ist, von dem aus die Fahrbahn aufgenommen werden kann, bis zu einer Bildauswertungseinrichtung nicht unproblematisch. Da die Bilddaten in einer sehr hohen Bitrate vorliegen, ist eine breitbandige Verbindung erforderlich, die dick, kostenintensiv und in besonderer Weise gegen elektromagnetische Störungen zu schützen ist.

Durch JP 2003259355 A ist ein Gerät zur Überwachung der Umgebung eines Fahrzeugs bekannt geworden, bei dem die zu übertragenden Bilddaten komprimiert werden. Ferner ist durch EP 1 170 697 A2 ein Überwachungssystem bekannt geworden, bei dem Bilder mehrerer Kameras zu einem wiederzugebenden Bild zusammengefügt werden und den einzelnen Kameras Kompressionseinrichtungen nachgeschaltet sind. Bei diesen bekannten Einrichtungen werden typische Bildkompressionsverfahren angewandt, die eine spätere Bildauswertung beeinträchtigen und auch nur eine begrenzte Datenreduktion ergeben.

### Vorteile der Erfindung

Aufgabe der vorliegenden Erfindung ist es, eine Einrichtung zur Übertragung von Bilddaten anzugeben, die mit konstengünstigen und dünnen Leitungen auskommt. Diese Aufgabe wird erfindungsgemäß dadurch gelöst, dass in räumlicher Nähe zur Videokamera eine Einrichtung zur Datenreduktion vorgesehen ist, welche von der Videokamera erzeugte Bilddaten an die Bildauswertungseinrichtung angepasst reduziert und die reduzierten Bilddaten zur Bildauswertungseinrichtung sendet. In räumlicher Nähe bedeutet vorzugsweise, dass die Datenreduktionseinrichtung im selben Gehäuse wie die Videokamera, gegebenenfalls auch auf einem gemeinsamen Substrat mit Schaltungen der Videokamera, angeordnet sein kann.

Die mit Hilfe der erfindungsgemäßen Einrichtung zu übertragenden reduzierten Bilddaten weisen eine geringe Bitrate auf, so dass eine Übertragung mit einfachen Leitungen bei verbesserter elektromagnetischer Verträglichkeit möglich ist.

In der Bildübertragungstechnik sind verschiedene Verfahren zur Datenreduktion bekannt geworden. Bei der erfmdungsgemäßen Einrichtung erfolgt die Datenreduktion derart, dass nur im Bild vorhandene Kanten übertragen werden. Insbesondere ist dabei vorgesehen, dass die Koordinaten der Kanten übertragen werden.

Zusätzlich oder alternativ kann bei der Erfindung die Datenreduktion derart erfolgen, dass bei der Übertragung Informationen aus Bildbereichen, die für die Bildauswertung nicht relevant sind, nicht übertragen werden. Wird beispielsweise das Bild einer etwa horizontal ausgerichteten Videokamera zur Fahrspurerkennung benutzt, so ist dafiir im Wesentlichen der untere Bildbereich erforderlich, so dass Informationen im oberen Bildbereich nicht übertragen werden Je nach Voraussetzungen im Einzelnen kann es dabei durchaus vorteilhaft sein, dabei nur die untere Bildhälfte unreduziert zu übertragen.

Die Bildauswertungseinrichtung kann verschiedene Funktionen erfüllen, vorzugsweise ist jedoch vorgesehen, dass die Bildauswertungseinrichtung zur Fahrspurerkennung und/oder zur Fahrzeugerkennung ausgebildet ist.

Ferner kann die erfindungsgemäße Einrichtung derart ausgebildet sein, dass die Datenreduktion an mehrere Bildauswertungen derart angepasst ist, dass die reduzierten Daten Informationen für die mehreren Bildauswertungen enthalten.

In zunehmenden Maße werden Videokameras auch zur Verbesserung der Sicht des Fahrers verwendet, beispielsweise zur Verbesserung der Nachtsicht. In einem solchen Fall kann bei der erfindungsgemäßen Einrichtung vorgesehen sein, dass in dem Fahrzeug ferner von der Videokamera entfernt eine Bildwiedergabeeinrichtung angeordnet ist und dass zur Übertragung der wiederzugebenden Bilddaten in räumlicher Nähe zur Videokamera eine weitere Datenreduktionseinrichtung vorgesehen ist. Bei entsprechenden räumlichen Voraussetzungen können die Daten der Datenreduktionseinrichtung und der weiteren Datenreduktionseinrichtung auch über eine gemeinsame Leitung zur Bildwiedergabeeinrichtung oder zur Bildauswertungseinrichtung übertragen werden.

### Zeichnung

Ausführungsbeispiele der Erfindung sind in der Zeichnung anhand mehrerer Figuren dargestellt und in der nachfolgenden Beschreibung näher erläutert. Es zeigt:
Fig. 1 eine schematische Darstellung eines Fahrzeugs mit einer an sich bekannten Einrichtung,
Fig. 2 ein erstes Ausführungsbeispiel einer erfindungsgemäßen Einrichtung,
Fig. 3 ein zweites Ausführungsbeispiel,
Fig. 4 ein Beispiel für ein Bild, bei welchem zu Zwecken der Übertragung Bildelemente (Pixel) ermittelt sind, welche auf Kanten (Helligkeitssprüngen) liegen, und
Fig. 5 ein weiteres Ausführungsbeispiel.

### Beschreibung der Ausführungsbeispiele

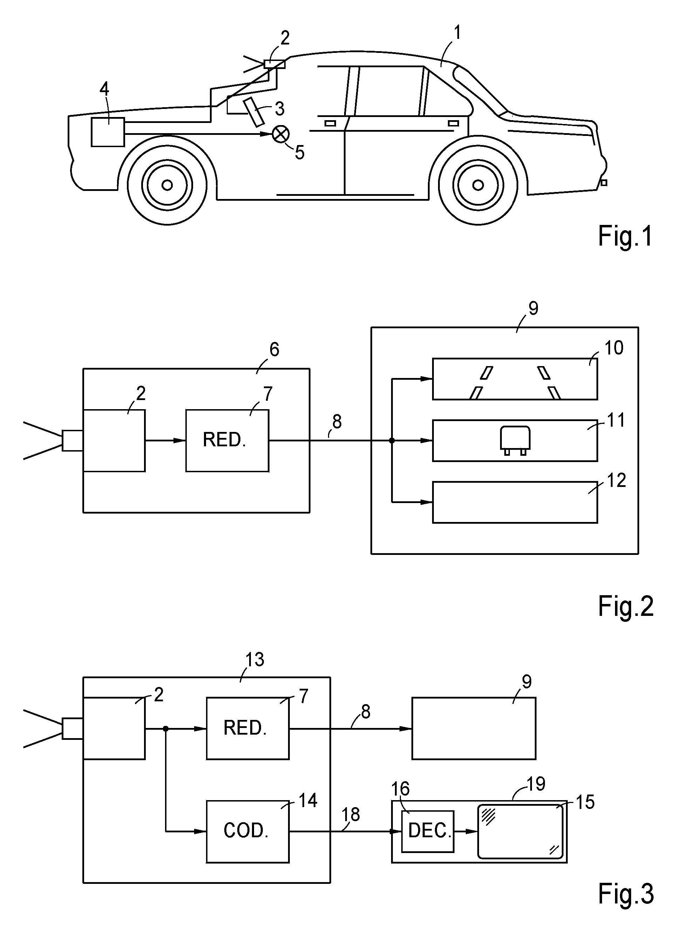

Bei dem in Fig. 1 dargestellten Fahrzeug 1 ist eine Videokamera 2 vorgesehen, die über je eine Leitung mit einer als Flachbildschirm ausgebildeten Bildwiedergabeeinrichtung 3 und einer Bildauswertungseinrichtung 4 verbunden ist. Die Ausgabe der von der Bildauswertungseinrichtung 4 ermittelten Informationen ist schematisch als Warnleuchte 5 dargestellt.

Bei dem Ausführungsbeispiel nach Fig. 2 ist die Videokamera 2 in einem gemeinsamen Gehäuse 6 mit einer Datenreduktionseinrichtung 7 angeordnet. Die reduzierten Daten werden über eine Leitung 8 einer Bildauswertungseinrichtung 9 zugeführt, welche verschiedene Bildauswertungskomponenten 10, 11, 12 enthält, wovon die Komponente 10 zur Fahrspurerkennung und die Komponente 11 zur Fahrzeugerkennung dient. Die Komponente 12 dient einer bei dem Ausführungsbeispiel nicht näher definierten weiteren Auswertungsfunktion.

Die Datenreduktion erfolgt beispielsweise durch Ermittlung der Kanten bzw. Helligkeitssprüngen im aufgenommenen Bild. Hierzu sind verschiedene Verfahren bekannt. Insbesondere kann das Bild mit einem Spacialfilter abgetastet werden, bei welchem der Grauwert eines jeden Pixels mit demjenigen der benachbarten Pixel verglichen wird. Überschreiten die Differenzen einen vorgegebenen Schwellwert, wird davon ausgegangen, dass das betreffende Pixel Teil einer Kante ist. Mit diesem Verfahren kann zusätzlich noch die Richtung des Kantenverlaufs bzw. die Richtung des Gradienten bestimmt werden. Die Übertragung der als Teil einer Kante erkannten Pixel kann beispielsweise durch deren Koordinaten (Spalte und Zeile) oder durch eine zeilenweise Lauflängencodierung vorgenommen werden, wobei zeilen- oder spaltenweise die Anzahl der zwischen den Kanten liegenden Pixel übertragen wird.

Bei dem Ausführungsbeispiel nach Fig. 3 sind in einem Gehäuse 13 die Videokamera 2, die Datenreduktionseinrichtung 7 und ein Coder 14 angeordnet. Der Coder 14 erzeugt datenreduzierte Signale zur Übertragung zu einer Bildwiedergabeeinrichtung 19 mit einem Flachbildschirm 15 über eine Leitung 18, beispielsweise nach dem JPEG-Verfahren. In der Bildwiedergabeeinrichtung 19 befmdet sich ferner ein Decoder 16. Um Verzögerungen der Wiedergabe des Bildes gegenüber der Aufnahme möglichst gering zu halten, werden für den Coder 14 und für den Decoder 16 schnelle integrierte Schaltungen verwendet.

Der Decoder 16 und die Bildwiedergabeeinrichtung 19 können auch räumlich voneinander getrennt sein. Außerdem kann eine Bildaufbereitungsschaltung dazwischen geschaltet sein.

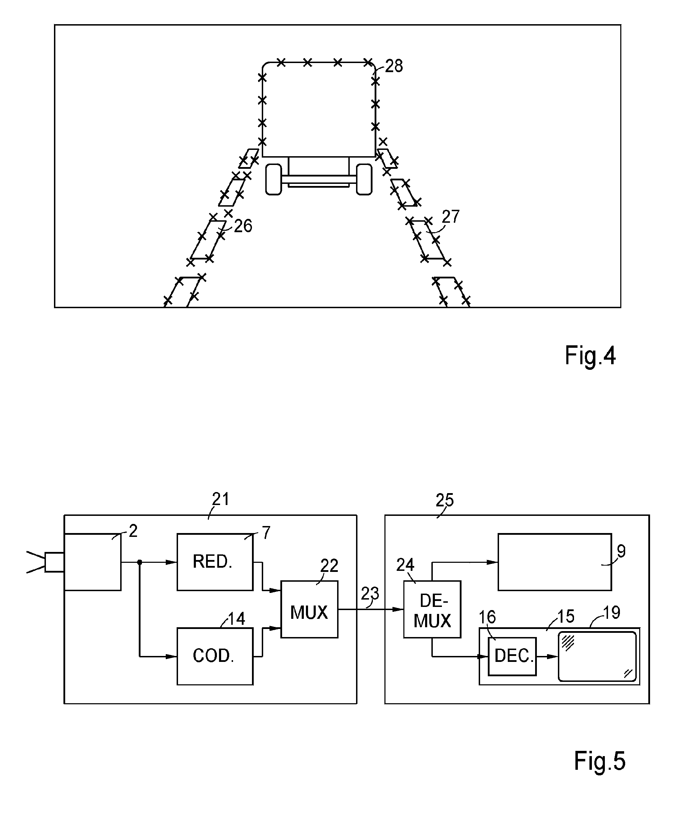

Fig. 4 zeigt ein Beispiel eines aufgenommenen Bildes, das eine Straße mit Fahrbahnmarkierungen 26, 27 und einen vorausfahrenden Lastkraftwagen 28 darstellt. In der Datenreduktionseinrichtung 7 (Fig. 2, 3, 5) werden die auf Kanten liegenden Pixel ermittelt, die in Fig. 4 als Kreuze dargestellt sind.

Bei dem Ausführungsbeispiel nach Fig. 5 werden die Daten für die Bildauswertungseinrichtung 9 und die Bildwiedergabeeinrichtung 19 über eine gemeinsame Leitung 23 geleitet, wozu in dem die Videokamera 2 enthaltenen Gehäuse 21 die Ausgänge der Datenreduktionseinrichtung 7 und des Coders 14 mit Eingängen eines Multiplexers 22 verbunden sind. In einer die Bildwiedergabeeinrichtung 19 und die Bildauswertungseinrichtung 9 umfassenden Baugruppe 25 werden die über die Leitung 23 eintreffenden Daten von einem Demultiplexer 24 auf die Bildwiedergabeeinrichtung 19 und die Bildauswertungseinrichtung 9 verteilt. Die als Blöcke dargestellten Komponenten können auch einzeln oder gemeinsam von einem Prozessor gebildet werden, der beispielsweise abwechselnd die Datenreduktion und die Codierung vornimmt und die bereits gemultiplexten Daten an die Leitung 23 ausgibt.

## Patentansprüche

1. Einrichtung zur Übertragung von Bilddaten von einer in einem Fahrzeug angeordneten Videokamera zu einer im Fahrzeug von der Videokamera entfernt angeordneten Bildauswertungseinrichtung, **dadurch gekennzeichnet, dass** in räumlicher Nähe zur Videokamera (2) eine Einrichtung (7) zur Datenreduktion vorgesehen ist, welche von der Videokamera (2) erzeugte Bilddaten an die Bildauswertungseinrichtung (9) angepasst reduziert und die reduzierten Bilddaten zur Bildauswertungseinrichtung (9) sendet.

2. Einrichtung nach Anspruch 1, **dadurch gekennzeichnet, dass** die Datenreduktion derart erfolgt, dass nur im Bild vorhandene Kanten (26, 27, 28) übertragen werden.

3. Einrichtung nach Anspruch 2, **dadurch gekennzeichnet, dass** die Koordinaten der Kanten (26, 27, 28) übertragen werden.

4. Einrichtung nach einem der vorhergehenden Ansprüche, **dadurch gekennzeichnet, dass** bei der Übertragung Informationen aus Bildbereichen, die für die Bildauswertung nicht relevant sind, nicht übertragen werden.

5. Einrichtung nach einem der vorhergehenden Ansprüche, **dadurch gekennzeichnet, dass** die Bildauswertungseinrichtung (9) zur Fahrspurerkennung (10) und/oder zur Fahrzeugerkennung (11) ausgebildet ist.

6. Einrichtung nach einem der vorhergehenden Ansprüche, **dadurch gekennzeichnet, dass** die Datenreduktion an mehrere Bildauswertungen (10, 11, 12) derart angepasst ist, dass die reduzierten Daten Informationen für die mehreren Bildauswertungen (10, 11, 12) enthalten.

7. Einrichtung nach einem der vorhergehenden Ansprüche, **dadurch gekennzeichnet, dass** in dem Fahrzeug (1) ferner von der Videokamera (2) entfernt eine Bildwiedergabeeinrichtung (3, 19) angeordnet ist und dass zur Übertragung der wiederzugebenden Bilddaten in räumlicher Nähe zur Videokamera (2) eine weitere Datenreduktionseinrichtung (14) vorgesehen ist.
